# EUROPÄISCHE PATENTSCHRIFT

(11) **EP 3 182 076 B1**
(45) Veröffentlichungstag und Bekanntmachung des Hinweises auf die Patenterteilung: **23.09.2020**
(21) Anmeldenummer: 16200281.0
(22) Anmeldetag: 23.11.2016
(51) Int. Cl.: G01F 23/296, F01M 11/12, G01D 11/24

(54) **VORRICHTUNG ZUR FÜLLSTANDSMESSUNG EINES FLUIDS IN EINEM BEHÄLTNIS FÜR EIN KRAFTFAHRZEUG**
DEVICE FOR MEASURING THE FILL LEVEL OF A FLUID IN A CONTAINER FOR A MOTOR VEHICLE
DISPOSITIF DE MESURE DU NIVEAU DE REMPLISSAGE D'UN LIQUIDE DANS UN RÉSERVOIR D'UN VÉHICULE AUTOMOBILE

(30) Priorität: 14.12.2015 DE 102015225123
(43) Veröffentlichungstag der Anmeldung: 21.06.2017
(73) Patentinhaber: Vitesco Technologies GmbH, 30165 Hannover (DE)
(72) Erfinder: Pfeiffer, Karl-Friedrich, 91058 Erlangen (DE)
(74) Vertreter: Waldmann, Georg Alexander

(56) Entgegenhaltungen:
- DE-A1-102010 011 492
- DE-A1-102011 008 585
- US-B2- 9 121 745

## Beschreibung

Die Erfindung betrifft eine Vorrichtung zur Füllstandsmessung eines Fluids in einem Behältnis für ein Kraftfahrzeug.

Kraftfahrzeuge weisen in der Regel Behältnisse auf, in denen Fluide angeordnet sind, die für einen Betrieb des Kraftfahrzeugs benötigt werden. Dies betrifft beispielsweise einen Kraftstofftank, in dem Kraftstoff vorrätig gelagert ist, oder auch eine Ölwanne, in der sich Öl für einen Betrieb der zugehörigen Brennkraftmaschine befindet. Um einen zuverlässigen und vorausschauenden Betrieb des Kraftfahrzeugs zu ermöglichen, ist die Kenntnis des Füllstandes solcher Behältnisse erforderlich, welche mittels Füllstandssensoren ermittelt werden kann.

Aus der US 9 121 745 B2 ist ein Ultraschallsensor zur Bestimmung eines Flüssigkeitspegels bekannt. Der daraus bekannte Ultraschallsensor weist ein langes Gehäuse, das einen Deckel und einen Boden umfasst, eine Messkammer, die im Gehäuse angeordnet ist und in der eine Flüssigkeit den gleichen Pegel aufweist wie außerhalb der Messkammer, und einen Ultraschall-Sendeempfänger am Boden innerhalb oder außerhalb des Gehäuses im Bereich der Messkammer auf, dessen ausgesendete Schallsignale an der Oberfläche der Flüssigkeit reflektieren und am Ultraschall-Sendeempfänger empfangen werden, um aus der Signallaufzeit den Flüssigkeitspegel zu ermitteln. Im Gehäuse ist neben der Messkammer wenigstens eine weitere Kammer zumindest teilweise vor der Messkammer oder zumindest teilweise um die Messkammer angeordnet, wobei die äußerste Kammer die Einlasskammer bildet und die Kammern miteinander in Verbindung stehen.

Die DE 10 2010 011 492 A1 betrifft eine Vorrichtung zur Bestimmung eines Füllstandes in einem Behälter, mit einem Dämpfungsbecher, der eine Eintrittsöffnung und eine Entlüftungsöffnung aufweist, mit einem im Bodenbereich des Dämpfungsbechers angeordneten Ultraschallwandler sowie mit mindestens einer Vorkammer.

Die DE 10 2011 008 585 A1 beschreibt eine Vorrichtung zur Ermittlung eines Füllstandes eines Mediums innerhalb eines Sammelbehälters, mit zumindest einer mit dem Sammelbehälter medienleitend verbundenen Messkammer, in der ein Ultraschallsensor angeordnet ist, und mit wenigstens einer der Messkammer vorgeschalteten Vorkammer, welche zumindest eine Einlassöffnung für das Medium aus dem Sammelbehälter aufweist.

Es ist eine Aufgabe, die der Erfindung zugrunde liegt, eine Vorrichtung zur Füllstandsmessung eines Fluids in einem Behältnis für ein Kraftfahrzeug zu schaffen, die dazu geeignet ist, eine zuverlässige und reproduzierbare Ermittlung des Füllstands des Fluids in dem Behältnis zu ermöglichen.

Die Erfindung ist durch den unabhängigen Anspruch 1 definiert.

Die Erfindung zeichnet sich aus durch eine Vorrichtung zur Füllstandsmessung eines Fluids in einem Behältnis für ein Kraftfahrzeug, welche eine äußere und eine innere Sensorhülse sowie eine Abschlusshülse und ein Kragenelement umfasst. Die äußere Sensorhülse weist eine Wandung auf, welche eine Ausnehmung der äußeren Sensorhülse begrenzt. Die innere Sensorhülse weist eine Wandung mit einer Entlüftungsöffnung auf, welche eine Ausnehmung der inneren Sensorhülse begrenzt. Die innere Sensorhülse ist innerhalb der Ausnehmung der äußeren Sensorhülse angeordnet, sodass ein Zwischenraum zwischen den Wandungen der äußeren und inneren Sensorhülse ausgebildet ist. Die Abschlusshülse weist ein äußeres Abschlusselement mit einer Ausnehmung und zwei Entlüftungsöffnungen auf. Die Abschlusshülse weist weiter ein inneres Abschlusselement mit einer Ausnehmung auf, das innerhalb der Ausnehmung des äußeren Abschlusselements angeordnet ist. Die Abschlusshülse ist bezogen auf eine Längsachse zum Abschließen eines jeweiligen axialen Endes der äußeren und inneren Sensorhülse ausgebildet. Das Kragenelement ist zwischen der inneren und äußeren Sensorhülse angeordnet und ist in Kontakt mit der Wandung der inneren und/oder äußeren Sensorhülse. In Bezug auf die Längsachse umgibt das Kragenelement die innere Sensorhülse bis auf eine Öffnung, um im Zusammenwirken mit den beiden Entlüftungsöffnungen der Abschlusshülse einen Entlüftungskanal für den Zwischenraum auszubilden, der separat ist zu einem Entlüftungskanal für die Ausnehmung der inneren Sensorhülse.

Mittels der beschriebenen Vorrichtung ist ein Füllstandssensor realisierbar, welcher eine zuverlässige und präzise Füllstandsmessung eines Fluids in einem Behältnis für ein Kraftfahrzeug ermöglicht. In einem zusammengebauten und angeordneten Zustand der Vorrichtung, sind die innere und äußere Sensorhülse zumindest teilweise mit Fluid gefüllt. Die äußere Sensorhülse repräsentiert dann ein Beruhigungsrohr, in dem das Fluid beruhigt wird und gegebenenfalls vorhandene Luftblasen an die Oberfläche des Fluids entweichen können. Die innere Sensorhülse repräsentiert das eigentliche Messrohr, in dem die Füllstandsmessung, beispielsweise mittels Aussenden und Empfangen von Ultraschallsignalen, durchgeführt wird. Insbesondere aufgrund des Kragenelements und der an das Kragenelement angepassten Ausgestaltung der Abschlusshülse ist mittels der beschriebenen Vorrichtung eine zuverlässige und reproduzierbare Füllstandsmessung in einem Behältnis auch über den gesamten Bereich der inneren Sensorhülse möglich.

Es ist eine Erkenntnis im Rahmen der Erfindung, dass einem nachteiligen Einfluss auf eine Füllstandsmessung in einem Behältnis aufgrund des Kapillareffekts entgegengewirkt werden kann. Der Kapillareffekt ist ein Verhalten von Flüssigkeiten, welches sie bei Kontakt mit Kapillaren, wie engen Röhren, Spalten oder Hohlräumen, zu angrenzenden Feststoffen zeigen. Dieser Effekt wird durch die Oberflächenspannung von Flüssigkeiten selbst und der Grenzflächenspannung zwischen Flüssigkeiten und einer angrenzenden festen Oberfläche hervorgerufen.

Somit besteht begründet durch den Kapillareffekt bei einem mit Fluid gefüllten Füllstandssensor die Möglichkeit, dass das Fluid in dem Zwischenraum oder Ringspalt zwischen dem Beruhigungsrohr und dem Messrohr höher steht als in der Ausnehmung des Messrohrs. Steigt das Fluid zwischen dem Beruhigungsrohr und dem Messrohr bis zu einem oberen Ende des Füllstandssensors an, kann es eine Entlüftungsstrecke für das Messrohr, die durch diesen Ringspalt führt, verschließen, bevor das Messrohr vollständig entlüftet ist. Die eingeschlossene Luft verhindert dabei, dass der Fluidspiegel in dem Messrohr bis ganz zum oberen Ende des Messrohrs steigen kann. Dementsprechend ist der Füllstand, der sich in dem Messrohr maximal einstellt und der die obere Messgrenze des Füllstandssensors darstellt, gegebenenfalls niedriger als die physikalische Länge des Messrohrs, was zu einer ungenauen Füllstandsmessung, insbesondere im oberen Bereich des Füllstandssensors, führen kann.

Mittels der beschriebenen Vorrichtung wird einem negativen Einfluss begründet durch den Kapillareffekt entgegengewirkt und es ist eine zuverlässige und reproduzierbare Füllstandsmessung über die komplette physikalische Länge der inneren Sensorhülse möglich. Die Abschlusshülse und das Kragenelement realisieren in einem montierten Zustand zwei zueinander separate Entlüftungspfade, so dass ein Entlüften des Zwischenraums zwischen der inneren und äußeren Sensorhülse und ein Entlüften der Ausnehmung der inneren Sensorhülse voneinander entkoppelt sind.

Das Kragenelement schließt den Zwischenraum in Bezug auf die Längsachse an einem oberen Ende der Vorrichtung ab und lässt Luftblasen nur durch eine Öffnung passieren. Mit dem Begriff "oben" oder "oberes Ende" der Vorrichtung beziehungsweise der jeweiligen Elemente ist in diesem Zusammenhang ein axialer Endbereich bezeichnet, in dessen Richtung ein Aufsteigen und Entlüftung von Luftblasen innerhalb des Fluids stattfindet. Die Abschlusshülse ist in ihrer Ausgestaltung auf das Kragenelement abgestimmt und gibt einen definierten Entlüftungspfad für aufsteigende Luftblasen vor, die die Öffnung des Kragenelements passieren. Die Abschlusshülse bildet somit ein oberes Endstück der Vorrichtung und stellt im Wesentlichen eine abschließende Erweiterung der äußeren und inneren Sensorhülse dar. An dem oberen Ende der Vorrichtung ist der Zwischenraum somit von der Wandung des äußeren und inneren Abschlusselements begrenzt und in einem Betrieb im Wesentlichen fluidfrei, sodass Luft aus der Ausnehmung der inneren Sensorhülse zuverlässig entweichen kann.

Gemäß einer Weiterbildung umfasst die Vorrichtung ein Abstandselement, das die Öffnung des Kragenelements einseitig begrenzt und das die innere Sensorhülse von der Wandung der äußeren Sensorhülse vorgegeben beabstandet und einen Teil der Entlüftungskanäle begrenzt.

Ein solches Abstandselement fungiert einerseits als Abstandshalter der inneren Sensorhülse von der äußeren Sensorhülse, um die innere Sensorhülse relativ zu der äußeren Sensorhülse zu positionieren und einen vorgegebenen Zwischenraum zwischen der inneren und äußeren Sensorhülse auszubilden. Außerdem kann die innere Sensorhülse mittels des Abstandselements an der äußeren Sensorhülse befestigt werden. Zum Beispiel ist das Abstandselement an einer Außenseite der Wandung der inneren Sensorhülle angeordnet und die äußere Sensorhülse weist an einer Innenseite seiner Wandung eine zu dem Abstandselement korrespondierende Ausnehmung auf, in die das Abstandselement angeordnet werden kann, so dass auf einfache Weise eine Positionierung der beiden Sensorhülsen zueinander eingerichtet und ein vorgegebener Zwischenraum ausgebildet werden kann.

Das Abstandselement ist beispielsweise als ein separates Element form-, stoff- und/oder kraftschlüssig mit der inneren Sensorhülse verbunden oder es ist einstückig mit der inneren Sensorhülse ausgebildet und zum Beispiel im Rahmen eines Spritzgussprozesses zusammen mit der inneren Sensorhülse hergestellt worden. Alternativ kann das Abstandselement auch als ein Teil der äußeren Sensorhülse ausgebildet sein, um die innere Sensorhülse vorgegeben zu beabstanden und einen Zwischenraum zwischen den beiden Sensorhülsen auszubilden.

Gemäß einer Weiterbildung der Vorrichtung weist das Kragenelement eine Trennwand auf, die die Öffnung des Kragenelements einseitig begrenzt und die einen Teil der Entlüftungskanäle begrenzt. Beispielsweise ist die Trennwand des Kragenelements in Bezug auf die Öffnung des Kragenelements gegenüberliegend zu dem Abstandselement ausgebildet, so dass das Abstandselement und die Trennwand des Kragenelements die Öffnung des Kragenelements ausbilden und somit einerseits, mit einander zugewandten Seiten, einen Teil des Entlüftungskanals für den Zwischenraum begrenzen und andererseits, mit einander abgewandten Seiten, den Entlüftungskanal für die innere Sensorhülse limitieren.

Gemäß einer Weiterbildung der Vorrichtung ist das Kragenelement ein Teil der inneren Sensorhülse. Das Kragenelement ist beispielsweise als ein separates Element form-, stoff- und/oder kraftschlüssig an dem oberen axialen Ende der Vorrichtung mit der inneren Sensorhülse gekoppelt oder es ist einstückig im Rahmen eines gemeinsamen Herstellungsprozesses mit der inneren Sensorhülse ausgebildet worden. Alternativ kann das Kragenelement auch als ein Teil der äußeren Sensorhülse ausgebildet sein und entsprechend mit der äußeren Sensorhülse gekoppelt oder mit dieser einstückig gefertigt worden sein.

Gemäß einer Weiterbildung der Vorrichtung weist das innere Abschlusselement Trennwände auf, die sich bis zu dem äußeren Abschlusselement erstrecken und die einen Teil der Entlüftungskanäle begrenzen. Insbesondere das Zusammenwirken der Abschlusshülse mit dem Kragenelement realisiert eine Vorrichtung, mittels der eine zuverlässige und präzise Füllstandsmessung des Fluids in einem Behältnis für ein Kraftfahrzeug möglich ist. Die beschriebene Weiterbildung gibt eine mögliche Ausgestaltung der Abschlusshülse und der darin befindlichen inneren und äußeren Abschlusselemente an, die in einem montierten Zustand nutzbringend mit dem Kragenelement zusammenwirken und vorgegebene Entlüftungskanäle realisieren. Das Kragenelement, das Abstandelement und die Abschlusshülse sind hinsichtlich ihrer geometrischen Ausgestaltung so aufeinander abgestimmt, dass ein stabiler und zuverlässiger Füllstandssensor realisierbar ist, welcher eine nutzbringende Entlüftung der beiden Sensorhülsen ermöglicht.

Gemäß einer Weiterbildung der Vorrichtung sind die inneren Trennwände des inneren Abschlusselements dazu ausgebildet, in Kontakt mit der Trennwand des Kragenelements und mit dem Abstandselement zu sein und dadurch einen Teil der Entlüftungskanäle zu begrenzen. Auf diese Weise wird mittels der Abschlusshülse und der Trennwände des inneren Abschlusselements ein Kontakt zu der inneren und äußeren Sensorhülse und insbesondere zu der Trennwand des Kragenelements und dem oberen Ende des Abstandselements realisiert, so dass im Zusammenwirken der Abschlusshülse und der inneren und äußeren Sensorhülse sowie dem darin befindlichen Kragenelement eine zuverlässige Entlüftung der Vorrichtung und somit eine präzise Füllstandsmessung mittels der Vorrichtung möglich ist.

Gemäß einer Weiterbildung der Vorrichtung sind die äußere und innere Sensorhülse, die Abschlusshülse und das Kragenelement in Bezug auf die Längsachse koaxial angeordnet. Beispielsweise sind die zusammenwirkenden Elemente bis auf zugehörige Öffnungen und/oder Trennwände im Wesentlichen rotationssymmetrisch ausgebildet.

Gemäß einer Weiterbildung der Vorrichtung ist das Kragenelement in Bezug auf die Längsachse bis auf die Öffnung des Kragenelements ringförmig ausgebildet.

Gemäß einer Weiterbildung der Vorrichtung ist das Kragenelement in Bezug auf die Längsachse spiralförmig ausgebildet.

Diese Weiterbildung der Vorrichtung beschreiben konkrete geometrische Ausgestaltungen des Kragenelements, welche auf einfache Weise zu fertigen sind und zu einer zuverlässigen Entlüftung der inneren und äußeren Sensorhülse beitragen und dadurch eine präzise Füllstandsmessung mittels der beschriebenen Vorrichtung ermöglichen.

Ausführungsbeispiele der Erfindung sind im Folgenden anhand der schematischen Zeichnungen näher erläutert. Es zeigen:
- Figur 1A: ein Ausführungsbeispiel einer inneren Sensorhülse mit einem Kragenelement einer Vorrichtung zur Füllstandsmessung eines Fluids in einem Behältnis für ein Kraftfahrzeug,
- Figur 1B: ein Ausführungsbeispiel einer Abschlusshülse der Vorrichtung,
- Figur 2A: ein Ausführungsbeispiel der inneren Sensorhülse mit dem Kragenelement nach Figur 1A angeordnet in einer äußeren Sensorhülse der Vorrichtung,
- Figur 2B: das Ausführungsbeispiel nach Figur 2A in einer Aufsicht,
- Figur 3: ein weiteres Ausführungsbeispiel des Kragenelements und der inneren Sensorhülse,
- Figur 4: das Ausführungsbeispiel der inneren und äußeren Sensorhülse nach den Figuren 2A und 2B ohne Kragen-element.

Elemente gleicher Konstruktion oder Funktion sind figuren-übergreifend mit den gleichen Bezugszeichen gekennzeichnet.

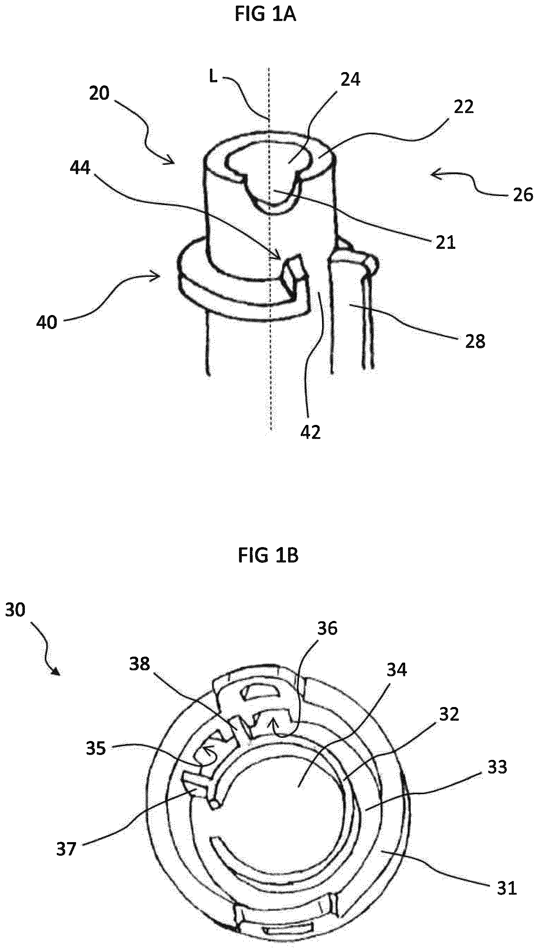

Figur 1A zeigt in einer perspektivischen Ansicht ein Ausführungsbeispiel einer inneren Sensorhülse 20, welche eine Wandung 22 aufweist, die eine Ausnehmung 24 begrenzt. Die Sensorhülse 20 weist bezogen auf eine Längsachse L an einem axialen Ende 26 eine Entlüftungsöffnung 21 in der Wandung 22 auf. Bis auf die Entlüftungsöffnung 21 ist die Sensorhülse 20 bezüglich der Längsachse L im Wesentlichen rotationssymmetrisch ausgebildet und realisiert ein Messrohr einer Vorrichtung zur Füllstandsmessung eines Fluids in einem Behältnis für ein Kraftfahrzeug.

An der inneren Sensorhülse 20 ist ein Abstandselement 28 angeordnet, welches sich im Wesentlichen parallel zur Längsachse L erstreckt. Außerdem ist ein Kragenelement 40 dargestellt, welches eine Trennwand 44 und eine Öffnung 42 aufweist. Das Kragenelement 40 ist bis auf die Öffnung 42 ringförmig ausgebildet und umgibt die innere Sensorhülse 20 im Bereich ihres oberen axialen Endes 26. Mit dem Begriff "oben" oder "oberes Ende" der inneren Sensorhülse, der Vorrichtung oder jedes weiteren Elements ist in diesem Zusammenhang der axiale Endbereich bezeichnet, der in Bezug auf die Längsachse L vertikal über einem unteren axialen Endbereich ausgebildet ist. Das Kragenelement 40 ist beispielsweise als separates Element ausgebildet und form-, stoff- und/oder kraftschlüssig mit der inneren Sensorhülse 20 gekoppelt oder es ist einstückig mit der inneren Sensorhülse 20 ausgebildet und beispielsweise im Rahmen eines gemeinsamen Herstellungsprozesses mit der inneren Sensorhülse 20 ausgebildet.

Anhand der nachfolgenden Figuren wird ersichtlich, dass die innere Sensorhülse 20 im Zusammenwirken mit einer äußeren Sensorhülse 10, dem Kragenelement 40 und einer Abschlusshülse 30 eine Vorrichtung realisiert, die als Füllstandssensor ein zuverlässiges und präzises Ermittelns eines Füllstands eines Fluids in einem Behältnis für ein Kraftfahrzeug ermöglicht.

Figur 1B zeigt in einer perspektivischen Ansicht von unten ein Ausführungsbeispiel einer Abschlusshülse 30, welche ein äußeres Abschlusselement 31 mit einer Ausnehmung 33 und ein inneres Abschlusselement 32 mit einer Ausnehmung 34 aufweist. Das innere Abschlusselement 32 weist zwei Trennwände 37 und 38 auf und ist bis auf die Trennwände 37 und 38 beabstandet zu dem äußeren Abschlusselement 31 innerhalb der Ausnehmung 33 angeordnet. Somit umschließt das äußere Abschlusselement 31 das innere Abschlusselement 32 und weist zudem zwei Entlüftungsöffnungen 35 und 36 auf, die zum Zwecke der Entlüftung der Vorrichtung ausgebildet sind. Die Entlüftungsöffnung 35 ist in einer Wandung des äußeren Abschlusselements 31 zwischen den beiden Trennwänden 37 und 38 des inneren Abschlusselements 32 ausgebildet.

Die Entlüftungsöffnung 36 hingegen ist über einen Entlüftungskanal, der durch die Wandungen des äußeren und inneren Abschlusselements 31 und 32 begrenzt ist, mit der Ausnehmung 34 des inneren Abschlusselements 32 gekoppelt. Anhand der nachfolgenden Figuren wird ersichtlich, dass auf diese Weise im Zusammenwirken der Abschlusshülse 30 und des Kragenelements 40 sowie der inneren und äußeren Sensorhülse 10 und 20 zwei zueinander separate Entlüftungspfade realisiert werden, die ein zuverlässiges Entlüften der Vorrichtung und dadurch ein präzises Ermitteln eines Füllstands eines Fluids in einem Behältnis über die gesamte Länge der inneren Sensorhülse 20 ermöglichen.

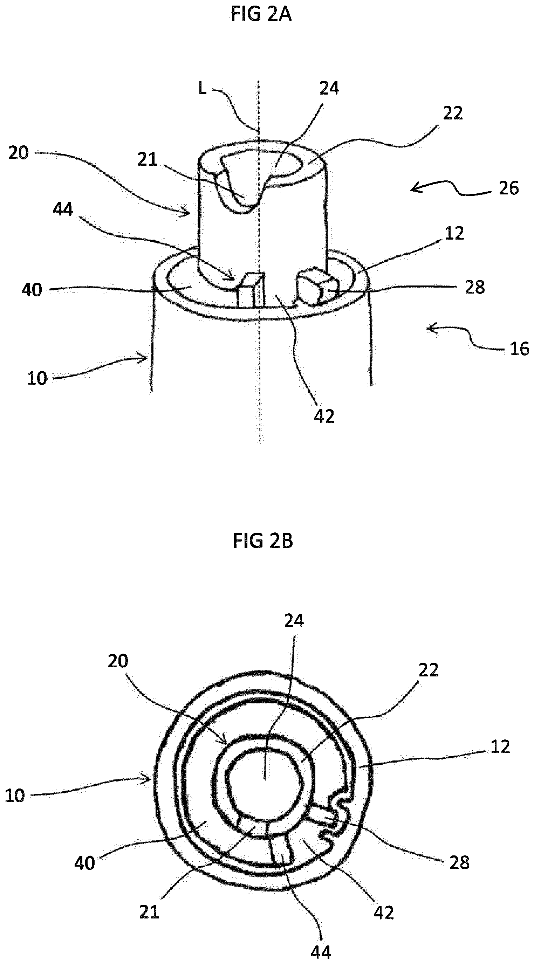

Figur 2A zeigt in einer perspektiven Ansicht ein Ausführungsbeispiel der inneren Sensorhülse 20 nach Figur 1A, welche in der äußeren Sensorhülse 10 angeordnet ist. Das Abstandselement 28 realisiert einen vorgegebenen Abstand der inneren Sensorhülse 20 zu einer Wandung 12 der äußeren Sensorhülse 10 und bildet somit einen Zwischenraum 3 zwischen den Wandungen 12 und 22 der äußeren und inneren Sensorhülsen 10 und 20 aus. Der Zwischenraum 3 realisiert einen Ringspalt, so dass die äußere Sensorhülse 10 als Beruhigungsrohr für ein in dem Zwischenraum 3 befindliches Fluid fungiert und gegebenenfalls vorhandene Gas- oder Luftblasen in dem Fluid aufsteigen und entlüften können. Zu diesem Zweck schließt das Kragenelement 40 die äußere Sensorhülse 10 bis auf die Öffnung 42 an einem oberen axialen Ende 16 ab, sodass aufsteigendes Gas durch die Öffnung 42 entlüften kann.

Die Trennwand 44 des Kragenelements 40 und das Abstandselement 28 begrenzen die Öffnung 42 und bilden dadurch einen Teil des Entlüftungskanals für den Zwischenraum 3 aus. Ein weiterer separater Entlüftungskanal ist für die innere Sensorhülse 20 ausgebildet und durch die Wandung 22 der inneren Sensorhülse sowie die Wandung des inneren Abschlusselements 32 realisiert, welches in einem betriebsfertigen Zustand auf oder an der inneren Sensorhülse 20 angeordnet ist.

Figur 2B zeigt das in Figur 2A dargestellte Ausführungsbeispiel in einer Aufsicht, in der zu erkennen ist, dass das Abstandselement 28 die innere Sensorhülse 20 von der äußeren Sensorhülse 10 beabstandet. Die Wandung 12 des äußeren Sensorelements 10 weist in diesem Ausführungsbeispiel zwei vorspringende Bereiche auf, die sich im Wesentlichen parallel zur Längsachse L erstrecken und zwischen denen das Abstandselement 28 zuverlässig anordbar ist. Das Abstandselement 28 kann als separates Element form-, kraft- und/oder stoffschlüssig mit der inneren Sensorhülse 20 verbunden sein oder es ist einstückig mit der inneren Sensorhülse 20 ausgebildet.

Das Kragenelement 40 ist in bündigem Kontakt mit der Wandung 22 der inneren Sensorhülse 20 und schließt gegebenenfalls auch bündig mit der Wandung 12 der äußeren Sensorhülse 10 ab, sodass eine zuverlässige Entlüftung des Zwischenraums 3 und der Ausnehmung 24 der inneren Sensorhülse 20 möglich sind.

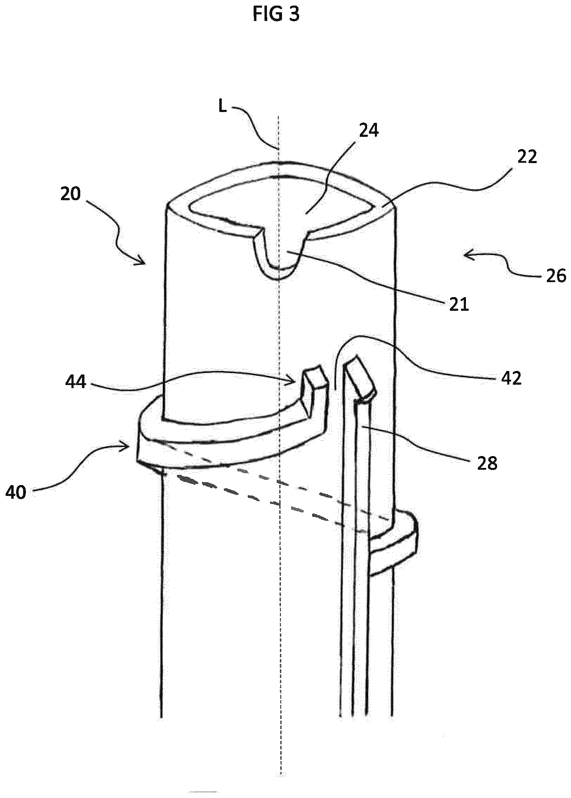

Figur 3 zeigt in einer perspektiven Ansicht eine weitere Ausführungsform des Kragenelements 40, welches spiral- oder schneckenförmig ausgestaltet ist. Im Vergleich dazu schließt das Kragenelement 40 den Zwischenraum 3 in den Ausführungsbeispielen gemäß Figur 1A, 2A und 2B im Wesentlichen waagerecht ab, wobei die Waagerechte senkrecht zur dargestellten Längsachse L orientiert ist. Das in diesem Ausführungsbeispiel illustrierte Kragenelement 40 weist auch eine wesentliche vertikale Komponente auf und umschließt die Wandung 22 der inneren Sensorhülse 20 spiralförmig. Bei einer solchen Ausgestaltung des Kragenelements 40 liegt die Entlüftungsöffnung 42 am höchsten Punkt, was sich vorteilhaft auf das Entlüften des Zwischenraums 3 zwischen der inneren und äußeren Sensorhülse 10 und 20 auswirken kann.

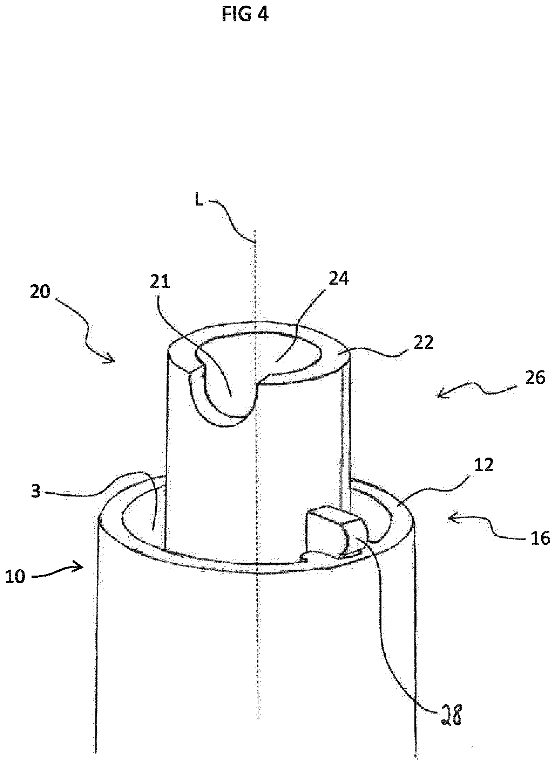

Figur 4 illustriert die beschriebenen Sensorhülsen 10 und 20 ohne das Kragenelement 40, um die Position des Zwischenraums 3 zwischen der inneren und äußeren Sensorhülse 10 und 20 zu verdeutlichen, welcher aufgrund der beschriebenen Abschlusshülse 30 und des Kragenelements 40 getrennt von der inneren Sensorhülse 20 entlüftet wird.

Die beschriebene Vorrichtung realisiert somit einen Füllstandssensor, welcher es beispielsweise ermöglicht, mittels Ultraschallsignalen den Füllstand eines Fluids in einem Behältnis für ein Kraftfahrzeug zuverlässig und präzise zu messen. Um eine nutzbringende Messfähigkeit zu gewährleisten, weist der Füllstandssensor die innenliegende Sensorhülse 20, in der die Messung stattfindet, und ein Vorvolumen auf, welches in den dargestellten Ausführungsbeispiel als Zwischenraum 3 durch die Wandungen 12 und 22 der äußeren und inneren Sensorhülsen 10 und 20 realisiert ist. Der Zwischenraum 3 weist somit mindestens einer Kammer auf, in dem das Fluid beruhigt wird und eventuelle vorhandene Gas- oder Luftblasen aufsteigen können, so dass sie nicht in die innere Sensorhülse 20 gelangen.

Beispielsweise haben die äußere und innere Sensorhülse 10 und 20 bezogen auf die Längsachse L eine im Wesentlichen gleiche Länge und sind, wie in den Ausführungsbeispielen illustriert, in etwa konzentrisch zu einander angeordnet. Das Entlüften der beiden Sensorhülsen 10 und 20 ist erforderlich, um eine zuverlässige Füllstandmessung zu ermöglichen und vorhandene Störeinflüsse, wie Gasblasen, zu reduzieren.

Die beiden Sensorhülsen 10 und 20 werden mit einer gemeinsamen Kappe, die als Abschlusshülse 30 realisiert ist, abgeschlossen. Die Abschlusshülse 30 ermöglicht es mit den jeweiligen Entlüftungsöffnungen 35 und 36, den Zwischenraum 3 und die Ausnehmung 24 im Zusammenhang mit der Entlüftungsöffnung 21 der inneren Sensorhülse 20 zu entlüften. Das innere Abschlusselement 32 wirkt dabei als radiale und ringförmige Trennwand und separiert mittels der Trennwände 37 und 38 den Entlüftungspfad des Zwischenraums 3 von dem der Ausnehmung 24 der inneren Sensorhülse 20.

In dem Zwischenraum 3 können vorhandene Luftblasen aufsteigen, die Öffnung 42 des Kragenelements 40 passieren und zwischen den beiden Trennwänden 37 und 38 des inneren Abschlusselements 32 durch die Entlüftungsöffnung 35 des äußeren Abschlusselements 31 die Vorrichtung beziehungsweise den Füllstandssensor verlassen. Aufsteigende Gasblasen innerhalb der inneren Sensorhülse 20 treten am oberen axialen Ende 26 durch die Entlüftungsöffnung 21 in die Abschlusshülse 30 zwischen das äußere und innere Abschlusselement 31 und 32 ein und können über eine verlängerte Strecke (in den dargestellten Ausführungsbeispielen etwa 3/4 des Rohrumfangs der Abschlusshülse 30), nach außen gelangen kann. Mittels einer solchen verlängerten Entlüftungsstrecke für die innere Sensorhülse 20 reduziert sich vor allem die Wahrscheinlichkeit, in umgekehrter Richtung Luftblasen in das Messrohr beziehungsweise die innere Sensorhülse zu verschleppen. Der Zwischenraum 3 zwischen der inneren und äußeren Sensorhülse 10 und 20 realisiert einen Ringspalt, welcher am oberen axialen Ende 16 und 26 der inneren und äußeren Sensorhülse 10 und 20 durch das Kragenelement 40 bis auf die Öffnung 42 abgeschlossen wird.

Mittels der beschriebenen Vorrichtung wird insbesondere dem Kapillareffekt entgegengewirkt, der dazu führt, dass in dem Zwischenraum 3 das Fluid höher steigt als in der Ausnehmung 24 der inneren Sensorhülse 20. Wenn der Füllstand beispielsweise bis zu dem oberen Ende eines Füllstandssensors steigt, kann das Fluid in dem Beruhigungsrohr die Entlüftungsstrecke des Messrohrs, die durch den Ringspalt führt, verschließen, bevor das Messrohr vollständig entlüftet ist. Die eingeschlossene Luft verhindert dann, dass der Fluidspiegel im Messrohr bis ganz zum oberen Ende des Messrohrs steigen kann. Dementsprechend ist der Füllstand, der sich in dem Messrohr maximal einstellen kann, niedriger als die physikalische Länge des Messrohrs. Eine Verwendung eines solchen Füllstandssensors kann somit insbesondere im oberen Bereich zu einer unzuverlässigen und ungenauen Füllstandsmessung führen. Mittels der beschriebenen Vorrichtung wird eine solche Ungenauigkeit einer Füllstandsmessung vermieden oder zumindest entgegengewirkt, indem das Kragenelement 40 als zusätzliches Element gezielt angeordnet und ausgebildet wird und die Abschlusshülse 30 auf das Kragenelement 40 abgestimmt wird und umgekehrt.

In einem zusammengebauten Zustand der Vorrichtung sorgen somit die Kombination aus Kragenelement 40 und Abschlusshülse 30 dafür, dass die Entlüftungsstrecke beziehungsweise der Entlüftungskanal, durch den die innere Sensorhülse 20 entlüftet wird, nicht mehr vom steigenden Fluidlevel in dem Zwischenraum 3 verschlossen werden kann, da das Fluid zwischen den beiden Sensorhülsen 10 und 20 durch das Kragenelement 40 und die Trennwände 37 und 38 des inneren Abschlusselements 32 von der Entlüftungsstrecke der inneren Sensorhülse 20 ferngehalten wird. Die beiden radialen Trennwände 37 und 38 der Abschlusshülse 30 wirken mit der Trennwand 44 des Kragenelements 40 und dem Abstandselement 28 an der inneren Sensorhülse 20 zusammen und bilden in Verbindung mit der Entlüftungsöffnung 35 des äußeren Abschlusselements 31 den direkten Entlüftungskanal für die äußere Sensorhülse 10 beziehungsweise den Zwischenraum 3 aus. Die beiden radialen Trennwände 37 und 38 des inneren Abschlusselements 32 sind dabei mit ihrer jeweiligen Unterseite in Kontakt mit einer jeweiligen Oberseite der Trennwand 44 des Kragenelements 40 und des Abstandselements 28.

## Patentansprüche

1. Vorrichtung zur Füllstandsmessung eines Fluids in einem Behältnis für ein Kraftfahrzeug, umfassend
- eine äußere Sensorhülse (10), die eine Wandung (12) aufweist, wobei die äußere Sensorhülse ein Beruhigungsrohr repräsentiert, in dem das Fluid beruhigt wird und gegebenenfalls vorhandene Luftblasen an die Oberfläche des Fluids entweichen können,
- eine innere Sensorhülse (20), die eine Wandung (22) mit einer Entlüftungsöffnung (21) aufweist, wobei die innere Sensorhülse (20) innerhalb der äußeren Sensorhülse (10) angeordnet ist, so dass ein Zwischenraum (3) zwischen den Wandungen (12, 22) der äußeren und inneren Sensorhülse (10, 20) ausbildet ist, wobei die innere Sensorhülse das eigentliche Messrohr repräsentiert, in dem eine Füllstandsmessung, beispielsweise mittels Aussenden und Empfangen von Ultraschallsignalen, durchgeführt werden kann,
- eine Abschlusshülse (30), die ein äußeres Abschlusselement (31) mit zwei Entlüftungsöffnungen (35, 36) und ein inneres Abschlusselement (32) aufweist, das innerhalb des äußeren Abschlusselements (31) angeordnet ist, wobei die Abschlusshülse (30) bezogen auf eine Längsachse (L) zum Abschließen eines jeweiligen axialen Endes (16, 26) der äußeren und inneren Sensorhülse (10, 20) ausgebildet ist, und
- ein Kragenelement (40), das zwischen der inneren und der äußeren Sensorhülse (10, 20) angeordnet ist und das in Kontakt mit der Wandung (12, 22) der inneren und äußeren Sensorhülse (10, 20) ist und das in Bezug auf die Längsachse (L) die innere Sensorhülse (20) bis auf eine Öffnung (42) umgibt, um im Zusammenwirken mit den beiden Entlüftungsöffnungen (35, 36) der Abschlusshülse (30) einen Entlüftungskanal für den Zwischenraum (3) auszubilden, der separat ist zu einem Entlüftungskanal für die innere Sensorhülse (20).

2. Vorrichtung nach Anspruch 1, umfassend ein Abstandselement (28), das die Öffnung (42) des Kragenelements (40) einseitig begrenzt und das die innere Sensorhülse (20) von der Wandung (12) der äußeren Sensorhülse (10) vorgegeben beabstandet und das einen Teil der Entlüftungskanäle begrenzt.

3. Vorrichtung nach Anspruch 1 oder 2, wobei das Kragenelement (40) eine Trennwand (44) aufweist, die die Öffnung (42) einseitig begrenzt und die einen Teil der Entlüftungskanäle begrenzt.

4. Vorrichtung nach einem der Ansprüche 1 bis 3, wobei das Kragenelement (40) ein Teil der inneren Sensorhülse (20) ist.

5. Vorrichtung nach einem der Ansprüche 1 bis 4, wobei das Kragenelement (40) ein Teil der äußeren Sensorhülse (10) ist.

6. Vorrichtung nach einem der Ansprüche 1 bis 5, wobei das innere Abschlusselement (32) Trennwände (37, 38) aufweist, die sich bis zu dem äußeren Abschlusselement (31) erstrecken und die einen Teil der Entlüftungskanäle begrenzen.

7. Vorrichtung nach Anspruch 6, wobei die jeweiligen Trennwände (37, 38) des inneren Abschlusselements (32) dazu ausgebildet sind, in Kontakt mit der Trennwand (44) des Kragenelements (40) und dem Abstandselement (28) zu sein und dadurch einen Teil der Entlüftungskanäle zu begrenzen.

8. Vorrichtung nach einem der Ansprüche 1 bis 7, wobei die äußere und innere Sensorhülse (10, 20), die Abschlusshülse (30) und das Kragenelement (40) in Bezug auf die Längsachse (L) koaxial angeordnet sind.

9. Vorrichtung nach einem der Ansprüche 1 bis 8, wobei das Kragenelement (40) in Bezug auf die Längsachse (L) bis auf die Öffnung (42) ringförmig ausgebildet ist.

10. Vorrichtung nach einem der Ansprüche 1 bis 8, wobei das Kragenelement (40) in Bezug auf die Längsachse (L) spiralförmig ausgebildet ist.

## Claims

1. Device for measuring the fill level of a fluid in a container for a motor vehicle, comprising
- an outer sensor sleeve (10) which has a wall (12), wherein the outer sensor sleeve represents a settling tube, in which the fluid is caused to settle and any air bubbles present can escape to the surface of the fluid,
- an inner sensor sleeve (20) which has a wall (22) with a venting opening (21), wherein the inner sensor sleeve (20) is arranged within the outer sensor sleeve (10) such that an intermediate space (3) is formed between the walls (12, 22) of the outer and inner sensor sleeves (10, 20), wherein the inner sensor sleeve represents the actual measurement tube, in which it is possible to carry out a fill level measurement, for example by means of sending and receiving ultrasonic signals,
- a terminating sleeve (30) which has an outer terminating element (31) with two venting openings (35, 36) and has an inner terminating element (32) which is arranged within the outer terminating element (31), wherein the terminating sleeve (30), with respect to a longitudinal axis (L), is designed to close off a respective axial end (16, 26) of the outer and inner sensor tubes (10, 20), and
- a collar element (40) which is arranged between the inner and outer sensor sleeves (10, 20) and which is in contact with the wall (12, 22) of the inner and outer sensor sleeves (10, 20) and which, with respect to the longitudinal axis (L), apart from an opening (42), surrounds the inner sensor sleeve (20) so as to form, in cooperation with the two venting openings (35, 36) of the terminating sleeve (30), a venting channel for the intermediate space (3), which venting channel is separate from a venting channel for the inner sleeve (20) .

2. Device according to Claim 1, comprising a spacer element (28) which delimits the opening (42) of the collar element (40) on one side and which spaces the inner sensor sleeve (20) apart from the wall (12) of the outer sensor sleeve (10) in a predefined manner and which delimits a part of the venting channels.

3. Device according to Claim 1 or 2, wherein the collar element (40) has a separating wall (44) which delimits the opening (42) on one side and which delimits a part of the venting channels.

4. Device according to one of Claims 1 to 3, wherein the collar element (40) is a part of the inner sensor sleeve (20) .

5. Device according to one of Claims 1 to 4, wherein the collar element (40) is a part of the outer sensor sleeve (10) .

6. Device according to one of Claims 1 to 5, wherein the inner terminating element (32) has separating walls (37, 38) which extend as far as the outer terminating element (31) and which delimit a part of the venting channels.

7. Device according to Claim 6, wherein the respective separating walls (37, 38) of the inner terminating element (32) are designed to be in contact with the separating wall (44) of the collar element (40) and with the spacer element (28) and, in this way, to delimit a part of the venting channels.

8. Device according to one of Claims 1 to 7, wherein, with respect to the longitudinal axis (L), the outer and inner sensor sleeves (10, 20), the terminating sleeve (30) and the collar element (40) are arranged in a coaxial manner.

9. Device according to one of Claims 1 to 8, wherein, with respect to the longitudinal axis (L), apart from the opening (42), the collar element (40) is of ring-shaped form.

10. Device according to one of Claims 1 to 8, wherein, with respect to the longitudinal axis (L), the collar element (40) is of spiral-shaped form.

## Revendications

1. Dispositif de mesure du niveau de remplissage d'un fluide dans un réservoir pour un véhicule automobile, comprenant
- une douille de capteur extérieure (10) qui présente une paroi (12), la douille de capteur extérieure représentant un tuyau de stabilisation dans lequel le fluide est stabilisé et des bulles d'air éventuellement présentes peuvent s'échapper à la surface du fluide,
- une douille de capteur intérieure (20) qui présente une paroi (22) munie d'un orifice d'aération (21), la douille de capteur intérieure (20) étant disposée à l'intérieur de la douille de capteur extérieure (10) de sorte qu'un intervalle (3) est réalisé entre les parois (12, 22) des douilles de capteur extérieure et intérieure (10, 20), la douille de capteur intérieure représentant le tube de mesurage proprement dit dans lequel une mesure de niveau de remplissage peut être effectuée, par exemple par l'émission et la réception de signaux ultrasonores,
- une douille terminale (30) qui présente un élément terminal extérieur (31) muni de deux orifices d'aération (35, 36) et un élément terminal intérieur (32) qui est disposé à l'intérieur de l'élément terminal extérieur (31), la douille terminale (30) étant réalisée par rapport à un axe longitudinal (L) pour obturer une extrémité axiale (16, 26) respective des douilles de capteur extérieure et intérieure (10, 20), et
- un élément de collerette (40) qui est disposé entre les douilles de capteur intérieure et extérieure (10, 20) et qui est en contact avec la paroi (12, 22) des douilles de capteur intérieure et extérieure (10, 20) et qui entoure par rapport à l'axe longitudinal (L) la douille de capteur intérieure (20) excepté un orifice (42) pour réaliser en coopération avec les deux orifices d'aération (35, 36) de la douille terminale (30) un canal d'aération pour l'intervalle (3) qui est séparé d'un canal d'aération pour la douille de capteur intérieure (20).

2. Dispositif selon la revendication 1, comprenant un élément d'espacement (28) qui limite l'orifice (42) de l'élément de collerette (40) d'un côté et espace de manière prédéfinie la douille de capteur intérieure (20) de la paroi (12) de la douille de capteur extérieure (10) et qui limite une partie des canaux d'aération.

3. Dispositif selon la revendication 1 ou 2, dans lequel l'élément de collerette (40) présente une cloison (44) qui limite l'orifice (42) d'un côté et qui limite une partie des canaux d'aération.

4. Dispositif selon l'une quelconque des revendications 1 à 3, dans lequel l'élément de collerette (40) fait partie de la douille de capteur intérieure (20).

5. Dispositif selon l'une quelconque des revendications 1 à 4, dans lequel l'élément de collerette (40) fait partie de la douille de capteur extérieure (10).

6. Dispositif selon l'une quelconque des revendications 1 à 5, dans lequel l'élément terminal intérieur (32) présente des cloisons (37, 38) qui s'étendent jusqu'à l'élément terminal extérieur (31) et qui limitent une partie des canaux d'aération.

7. Dispositif selon la revendication 6, dans lequel les cloisons (37, 38) respectives de l'élément terminal intérieur (32) sont réalisées pour être en contact avec la cloison (44) de l'élément de collerette (40) et de l'élément d'espacement (28) et pour limiter ainsi une partie des canaux d'aération.

8. Dispositif selon l'une quelconque des revendications 1 à 7, dans lequel les douilles de capteur intérieure et extérieure (10, 20), la douille terminale (30) et l'élément de collerette (40) sont disposés coaxialement par rapport à l'axe longitudinal (L).

9. Dispositif selon l'une quelconque des revendications 1 à 8, dans lequel l'élément de collerette (40) est réalisé en forme d'anneau excepté l'orifice (42) par rapport à l'axe longitudinal (L).

10. Dispositif selon l'une quelconque des revendications 1 à 8, dans lequel l'élément de collerette (40) est réalisé en forme de spirale par rapport à l'axe longitudinal (L).
